# EUROPÄISCHE PATENTANMELDUNG

(11) **EP 2 168 788 A1**
(43) Veröffentlichungstag der Anmeldung: **31.03.2010**
(21) Anmeldenummer: 09008299.1
(22) Anmeldetag: 25.06.2009
(51) Int. Cl.: B60G 17/052, B62D 61/12

(54) **Vorrichtung und Verfahren zum Durchführen einer Radstandregelung für Nutzfahrzeuge**

(30) Priorität: 24.09.2008 DE 102008048762; 04.03.2009 DE 102009011606
(71) Anmelder: WABCO GmbH, 30453 Hannover (DE)
(72) Erfinder: Glavinic, Andelko, 30161 Hannover (DE); Lange, Tobias, 50126 Bergheim (DE); Ronnenberg, Udo, 30900 Wedemark (DE); Schoppe, Michael, 30163 Hannover (DE); Stender, Axel, 31787 Hameln (DE)
(74) Vertreter: Lauerwald, Jörg

(57) **Zusammenfassung**

Die vorliegende Erfindung betrifft eine Vorrichtung und ein Verfahren zum Durchführen einer Radstandregelung für Nutzfahrzeuge, umfassend eine oder mehrere Achsen (12) mit Rädern (16), ein oder mehrere mit Druckluft beaufschlagbare Verstellmittel (18) zum Verstellen mindestens einer der Achsen (12) relativ zu einem Aufbau (20), einen Drucksensor (46) zum Messen des Drucks der Druckluft in den Verstellmitteln (18) und zum Erzeugen von entsprechenden Signalen und ein impulsgesteuertes Ventil (26) zum wahlweisen Zu- und Abführen der Druckluft in die Verstellmittel (18) und aus den Verstellmitteln (18) heraus.

## Beschreibung

Die vorliegende Erfindung betrifft eine Vorrichtung zum Durchführen einer Radstandregelung für Nutzfahrzeuge umfassend eine oder mehrere Achsen mit Rädern, ein oder mehrere mit Druckluft beaufschlagbare Verstellmittel zum Verstellen mindestens einer der Achsen relativ zu einem Aufbau und einen Drucksensor zum Messen des Drucks der Druckluft in den Verstellmitteln und zum Erzeugen von entsprechenden Signalen, sowie ein entsprechendes Verfahren. Weiterhin betrifft die Vorrichtung ein Nutzfahrzeug, welches eine derartige Vorrichtung aufweist und mit welchem das erfindungsgemäße Verfahren ausgeführt werden kann. Derartige Vorrichtungen, Vorrichtungen und Verfahren zur Radstandregelung sind aus dem Stand der Technik bekannt. Unter einem Aufbau werden im Folgenden sämtliche Einheiten eines Nutzfahrzeuges verstanden werden, die von einer Fahrwerksanordnung des Nutzfahrzeuges getragen werden. Dies kann eine Karosserie, eine Ladefläche oder ein Frachtraum sein. Unter Radstandregelungen werden hier alle Funktionen verstanden, die im Zusammenhang mit dem Heben oder Senken einer oder mehrerer Achsen eines Nutzfahrzeuges stehen. Durch das Heben oder Senken einer oder mehrerer Achsen wird der Radstand des Nutzfahrzeuges verändert und die Belastung der übrigen Achsen zielgerichtet verändert. Somit lässt sich beispielsweise eine Anfahrhilfe dadurch realisieren, dass die Räder der angetriebenen Achsen stärker belastet werden und dadurch die Haftung zwischen den Rädern und der Fahrbahn erhöht wird. Folglich wird ein Durchdrehen der angetriebenen Räder erschwert, so dass insbesondere auf schneebedeckten oder vereisten Fahrbahnen ein der Anfahrvorgang erleichtert oder überhaupt erst ermöglicht wird. Weiterhin kann das Rangieren des Nutzfahrzeuges ebenfalls durch Anheben einer oder mehrerer Achsen erleichtert werden. Beim Rangieren liegen die stärksten Lenkausschläge vor. Als Folge davon treten zwischen den Achsen hohe Spannungen auf, insbesondere, wenn zwei oder mehrere benachbarte nicht gelenkte Achsen vorhanden sind. Dadurch dass sich die Haftung zwischen den Rädern der angehobenen Achsen und der Fahrbahn verringert, reduzieren sich auch diese Spannungen. Folglich nimmt der Verschleiß der Räder und Radlager ab.

Bekannte Vorrichtungen zur Radstandregelung umfassen ein oder mehrere mit Druckluft beaufschlagbare Verstellmittel, welche zwischen den Achsen und einem Aufbau des Nutzfahrzeuges angeordnet sind. Durch Beaufschlagen der Verstellmittel mit Druckluft wird in den Verstellmitteln ein Druck erzeugt, welcher mit der Menge der eingeströmten Druckluft korreliert. Die Menge der Druckluft, mit welcher die Verstellmittel beaufschlagt werden, wird im Stand der Technik beispielsweise mithilfe eines Überstromventils ohne Rückschlag oder eines Druckbegrenzungsventils mit Nachspeisung gesteuert, wobei die Steuerung dieser Ventile manuell durch den Fahrer oder elektronisch erfolgen kann. Diese Ventile neigen allerdings dazu, den eingestellten Druckwert insbesondere bei Druckspitzen nicht zu halten. Druckspitzen treten zum Beispiel dann auf, wenn eine Achse bei Volllast des Nutzfahrzeuges gesenkt werden soll. Wird der Druckwert nicht gehalten, führt dies dazu, dass die gewünschte Entlastung der anderen Achsen nicht mehr gewährleistet wird und die anderen Achsen stärker als gewünscht oder sogar stärker als erlaubt belastet werden. Als Folge erhöht sich der Verschleiß der Radlager an den anderen Achsen, die im Extremfall versagen können. Weiterhin tritt bei der Verwendung dieser Ventile die Situation auf, dass ein vorgesehener Mindestdruck in den Verstellmitteln unterschritten wird. Die Verstellmittel übernehmen zumindest teilweise die Federung des Nutzfahrzeuges. Ein Mindestdruck ist deshalb notwendig, damit die Verstellmittel ihre minimal notwendige Federungswirkung entfalten können. Wird der Mindestdruck unterschritten, so würden beispielsweise beim Überfahren von Schlaglöchern, Bahnschwellen oder Bodenwellen auftretende Berührungen mit den Rädern ohne Abfederung direkt in die Fahrwerksanordnung eingeleitet, die dadurch stark belastet wird. Folglich verschleißt diese schneller oder wird beschädigt.

Ein Verfahren zur Mindestdruckhaltung in einem Luftfederbalg einer Tragachse ist aus der DE 10 2004 036 251 A1 bekannt. Hier werden mithilfe eines Wegsensors die Spannungen innerhalb der Fahrwerksanordnung ermittelt, da die Spannungen eine Änderung des Abstands zwischen den Achsen und dem Aufbau bewirken. Die Verstellmittel werden so angesteuert, dass die Spannungen reduziert werden. Der Minimaldruck im Luftfederbalg wird hier nicht direkt ermittelt, sondern der Luftfederbalg wird immer so mit Druckluft beaufschlagt, dass ein Minimalabstand zwischen der Achse und dem Aufbau nicht unterschritten wird. Das Problem der nicht gewährleisteten Druckwerthaltung der eingesetzten Ventile wird durch die in der DE 10 2004 036 251 A1 vorgeschlagenen Lösung nicht gelöst.

Aufgabe der vorliegenden Erfindung ist es daher, eine Vorrichtung und ein Verfahren anzugeben, mit denen es möglich ist, die Nachteile aus dem Stand der Technik zu überwinden und auf einfache Weise eine Mindestdruckhaltung in Verstellmitteln zu gewährleisten.

Gelöst wird die Aufgabe durch ein impulsgesteuertes Ventil zum wahlweisen Zu- und Abführen der Druckluft in die Verstellmittel und aus den Verstellmitteln heraus. Impulsgesteuerte Ventile umfassen zwei Stellglieder, über die das Be- und Entlüften der Verstellmittel bzw. das Heben und Senken der Achsen vorgenommen wird. Hierzu wird je ein Stellglied aktiviert. Werden beide Stellglieder gleichzeitig aktiviert, wird eine Haltestelle definiert. Auf diese Weise kann jeder beliebige Druck im Verstellmittel eingestellt und gehalten werden, wodurch die Achse stufenlos in jede Stellung gebracht und gehalten werden kann.

Da Drucksensoren in vielen Nutzfahrzeugen zur Bestimmung des Drucks in den Luftbalgen vorhanden sind, sind keine weiteren mechanischen Komponenten notwendig. Mit der erfindungsgemäßen Vorrichtung kann die Mindestdruckhaltung bzw. die Haltung eines vorgegebenen Druckwertes in den Verstellmitteln im Vergleich zu herkömmlichen Vorrichtungen ohne nennenswerte Mehrkosten realisiert werden. Weiterhin kann mithilfe des Drucksensors unmittelbar überprüft werden, ob der Druck im Verstellmittel einen vorgegebenen Minimalwert unterschreitet oder nicht. Es ist im Vergleich zu der in der DE 10 2004 036 251 A1 vorgeschlagenen Lösung nicht notwendig, eine fahrwerksabhängige Korrelation zwischen dem Abstand der Achse vom Aufbau und dem in dem Verstellmittel herrschenden Druck zu ermitteln. Der Drucksensor kann die sich auf den Druck beziehenden Signale in jeder geeigneten Form ausgeben, beispielsweise als optische Signale in Form einer Anzeigevorrichtung, so dass der Fahrer sehen kann, ob der Druck einen bestimmten Minimalwert unterschreitet. Weiterhin ist es denkbar, die Signale in elektronischer Form auszugeben.

Die Aufgabe wird weiterhin durch ein federrückgeführtes Ventil zum wahlweisen Zu- und Abführen der Druckluft in die Verstellmittel und aus den Verstellmitteln heraus sowie ein weiteres Ventil zum wahlweisen Absperren der Abfuhr der Druckluft aus den Verstellmitteln heraus gelöst. Federrückgeführte Ventile sind einfach im Aufbau sowie kostengünstig in der Anschaffung und zeichnen sich darüber hinaus durch eine hohe Robustheit und Zuverlässigkeit aus. Sie können allerdings nur binär zwischen einer belüftenden und einer entlüftenden Stellung geschaltet werden. Hierzu weist das Ventil ein Stellglied auf, welches einen Schieber oder einen Ventilkörper bei Aktivierung gegen die Kraft einer Feder in eine Stellung bringt, in dem das Verstellmittel entlüftet wird. Wird das Stellglied deaktiviert, geht wird der Schieber wieder in die Ausgangsposition zurückgestellt und das Verstellmittel belüftet. Folglich kann auch die Achse nur zwischen zwei Endstellungen verfahren werden. Durch diese Ausgestaltung der federrückgeführten Ventile wird erreicht, dass sie bei einem Ausfall der Bordelektronik automatisch öffnen und das Verstellmittel belüften, so dass im Verstellmittel der Maximaldruck anliegt. In dieser Stellung befinden sich die Verstellmittel auch im Grundzustand, womit sich die Achse in einer komplett abgesenkten Position befindet, in der sie maximal belastet ist. Soll die Achse nun entlastet werden, wird das federrückgeführte Ventil geöffnet. Ohne das weitere Ventil würde die Druckluft vollständig aus dem Luftbalg entweichen und sich die Achse in der komplett angehobenen Position befinden. Das weitere Ventil sperrt jedoch die Abfuhr der Druckluft bei einem vorgebbaren Druck im Luftbalg ab, so dass auch in dieser Ausgestaltung die Achse in alle gewünschten Zwischenstufen gefahren werden kann. Gleichzeitig ist sichergestellt, dass der eingestellte Druckwert auch unter hoher Belastung gehalten wird. Ferner wird die Unterschreitung eines Minimaldruckwertes sicher verhindert.

Die Vorrichtung wird durch eine Steuereinrichtung, insbesondere eines EBS-Modulators zum Empfangen der vom Drucksensor erzeugten Signale und zum Ansteuern des impulsgesteuerten Ventils, des federrückgeführten Ventil sowie des weiteren Ventils, welche mittels der Steuereinrichtung ansteuerbar sind. In diesem Fall werden die Signale des Drucksensors in elektronischer Form ausgegeben. Steuereinrichtungen, insbesondere EBS-Modulatoren sind in jedem modernen Nutzfahrzeug vorhanden und setzen Steuersignale in entsprechende pneumatische Signale um, beispielsweise zur Ansteuerung von pneumatisch betriebenen Bremsen. Es ist kein nennenswerter zusätzlicher technischer Aufwand notwendig, den EBS-Modulator so zu erweitern, dass er bei Unterschreiten eines wählbaren Mindestdrucks im Verstellmittel das Ventil so ansteuert, dass Druckluft solange in das Verstellmittel strömt, bis dass der Mindestdruck wieder erreicht wird. Die Konfiguration der EBS-Modulatoren kann entweder werkseitig, vom Service oder vom Fahrer selbst flexibel und ohne großen Aufwand auf den jeweiligen Fahrzeugtyp angepasst werden, insbesondere kann der Wert des Mindestdrucks, der in den Verstellmitteln herrschen soll, schnell verändert werden. Ferner sind EBS-Modulatoren so ausgestattet, dass sämtliche erfasste Daten und Konfigurationsänderungen gespeichert und jederzeit analysiert werden können. Auf diese Weise kann beispielsweise festgestellt werden, welcher Mindestdruck sich besonders gut zur Schonung der Radlager eignet oder ob ein Leck im Verstellmittel vorhanden ist und ein Austausch vorgenommen werden sollte. Eine in konventionellen Systemen schwer kontrollierbare manuelle Eingabe des Wertes für den Mindestdruck entfällt daher. Die Ansteuerbarkeit des impulsgesteuerten Ventils, des federrückgeführten Ventils sowie des weiteren Ventils mittels des EBS-Modulators stellt ebenfalls keine Schwierigkeit dar. So können beispielsweise die beiden Stellglieder des impulsgesteuerten Ventils als Magneten ausgestaltet werden. Bei gleichzeitiger Bestromung dieser Magneten kann jede beliebige Halteposition angesteuert und die betreffende Achse stufenlos in jede Position gefahren und gehalten werden. Auf diese Weise kann das impulsgesteuerte Ventil an EBS-Modulator angeschlossen und von ihm entsprechend der gemessenen Druckwerte im Verstellmittel betätigt werden. Dies gilt auch analog für das weitere und das federrückgeführte Ventil.

Vorteilhafterweise ist das Verstellmittel als Luftbalg ausgestaltet. Luftbalge finden weite Verwendung im Nutzfahrzeugbau, sind kostengünstig in der Anschaffung und zeichnen sich durch eine hohe Zuverlässigkeit aus. Allerdings neigen sie zum Zerknittern, wenn sie vollständig entlüftet werden. In Verbindung mit der erfindungsgemäßen Minimaldruckhaltung kann der Minimaldruck so gewählt werden, dass die Luftbalge nur soweit entlüftet werden, dass sie nicht zerknittern. Folglich wird die Lebensdauer der Luftbalge weiter erhöht.

Die Vorrichtung wird dadurch fortgebildet, dass die Vorrichtung drei Achsen umfasst, von denen zwei als Hauptachse und eine als Schleppachse ausgebildet sind. Dies ist eine charakteristische Ausgestaltung bei dreiachsigen Sattelanhängern. Als Hauptachse wird eine Achse bezeichnet, die sich immer in Kontakt mit der Fahrbahn befindet, nicht lenkbar ist und in ihrem Abstand zum Aufbau nicht verstellt werden kann. Hauptachsen weisen auch Luftbalge auf, jedoch dienen sie hierbei nicht zur Verstellung, sondern zur Federung. Eine Schleppachse bezeichnet eine Achse, die mithilfe der Verstellmittel, beispielsweise Luftbalge, in ihrem Abstand zum Aufbau verstellt werden kann. Üblicherweise wird die Schleppachse erst bei Überschreiten einer vorgebbaren kritischen Achslast der Hauptachse oder Hauptachsen belastet und wird wiederum entlastet, sobald die Achslast der Hauptachse unter einen vorgebbaren Wert fällt. Diese kritische Achslast der wird durch den Druckwert in den Luftbalgen der Schleppachse vorgegeben. Schleppachsen stehen aber selbst bei vollständig entlüfteten Luftbalgen aufgrund ihres Eigengewichts in Kontakt mit der Fahrbahn, da sie über keine Liftbalge verfügen, wie es bei Liftachsen der Fall ist. Liftachsen können mit den Liftbalgen, die über ein Hebelsystem entgegengesetzt zu den Luftbalgen wirken, soweit angehoben werden, dass sie keinen Kontakt mehr zu der Fahrbahn haben. Liftachsen sind aber nicht vom Problem, welches der vorliegenden Erfindung zugrunde liegt, betroffen. Da sie soweit angehoben werden, dass sie von der Fahrbahn entkoppelt sind, kommt es im Gegensatz zu Schleppachsen nicht zu Schäden an Lagern oder an der Fahrwerksanordnung, beispielsweise beim Überfahren von Schlaglöchern.

Wird die Schleppachse angehoben, werden die übrigen Achsen entsprechend stärker belastet. Aus Sicherheitsgründen kann daher der EBS-Modulator so konfiguriert werden, dass die Schleppachse nur unterhalb einer bestimmten Geschwindigkeit, beispielsweise bis zu 30 km/h betätigt werden kann. So kann ein plötzlicher Lastwechsel während der Fahrt durch eine versehentliche Betätigung der Schleppachse durch den Fahrer vermieden werden. Weiterhin kann der EBS-Modulator auch so konfiguriert werden, dass die Schleppachse bei Überschreiten der bestimmten Geschwindigkeit automatisch abgesenkt wird, sofern sie sich nicht schon im abgesenkten Zustand befindet oder weiter abgesenkt wird, um die Belastung der Hauptachsen gering zu halten. Dies ist dann sinnvoll, wenn das Nutzfahrzeug schwer beladen ist.

Die Vorrichtung wird dadurch vorteilhaft weitergebildet, dass die Vorrichtung fünf Achsen umfasst, von denen zwei lenkbar und drei nicht lenkbar sind, wobei von den drei nicht lenkbaren Achsen zwei als Hauptachse und eine als Schleppachse ausgebildet sind. Diese Weiterbildung ist eine charakteristische Ausgestaltung eines Anhängers von sogenannten "überlangen LKW," auch als "EuroCombi" oder "Gigaliner" bezeichnet, mit denen viele und große Lasten transportiert werden können. Um die großen Lasten so auf die Achsen verteilen zu können, dass die Achsen selbst die Radlager und die Fahrbahn nicht zu stark belastet werden, müssen vorzugsweise fünf Achsen vorgesehen werden. Allerdings treten beim Rangieren oder beim Durchfahren von engen Kurven hohe Spannungen zwischen den Achsen auf, insbesondere zwischen den zwei lenkbaren Achsen, aber auch zwischen den drei benachbarten nicht lenkbaren Achsen. Diese Spannungen können mit der erfindungsgemäßen Ausgestaltung der Vorrichtung auf einfache Weise zumindest deutlich reduziert werden.

Vorteilhafterweise wird die Erfindung dadurch weitergebildet, dass die Vorrichtung drei Achsen umfasst, von denen eine lenkbar und mindestens eine angetrieben ist, wobei eine Achse nicht lenkbar, nicht angetrieben und als Schleppachse ausgebildet ist. Diese Ausgestaltung liegt bei Zugfahrzeugen vor, die Erfindung ist also nicht auf Nutzfahrzeuge ohne eigenen Antrieb beschränkt. Die Vorteile der erfindungsgemäßen Vorrichtung kommen bei Zugfahrzeugen genauso zum Tragen wie bei Anhängerfahrzeugen.

Üblicherweise sind Schleppachsen nicht lenkbar und nicht angetrieben, jedoch ist die Anwendbarkeit der vorliegenden Erfindung nicht hierauf beschränkt. Vielmehr ist es denkbar, auch angetriebene und/oder lenkbare Achsen sowie Liftachsen erfindungsgemäß zu gestalten.

Ein weiterer Aspekt der vorliegenden Erfindung betrifft ein Nutzfahrzeug mit einer Vorrichtung zum Durchführen einer Radstandregelung nach einem der Ansprüche 1 bis 9. Die für die erfindungsgemäße Vorrichtung beschriebenen Vorteile treffen vollumfänglich auch auf ein Nutzfahrzeug zu, welches die erfindungsgemäße Vorrichtung verwendet. Dabei kann das Nutzfahrzeug beispielsweise ein Anhänger oder ein Zugfahrzeug sein.

Ferner betrifft ein zusätzlicher Aspekt der Erfindung ein Verfahren zum Durchführen einer Radstandregelung für Nutzfahrzeuge mit einem Aufbau und einer oder mehrerer Achsen mit Rädern, umfassend folgende Schritte:
- Verstellen einer der Achsen relativ zum Aufbau mit einem oder mehreren mit Druckluft beaufschlagbare Verstellmitteln,
- Messen des Drucks der Druckluft in den Verstellmitteln und Erzeugen von entsprechenden Signalen mit einem Drucksensor, und
- Wahlweises Zu- und Abführen der Druckluft in die Verstellmittel und aus den Verstellmitteln (18) heraus mithilfe eines impulsgesteuerten Ventils.

Ein weiteres erfindungsgemäßes Verfahren zum Durchführen einer Radstandregelung für Nutzfahrzeuge mit einem Aufbau und einer oder mehrerer Achsen mit Rädern umfasst folgende Schritte:
- Verstellen einer der Achsen relativ zum Aufbau mit einem oder mehreren mit Druckluft beaufschlagbare Verstellmitteln,
- Messen des Drucks der Druckluft in den Verstellmitteln und Erzeugen von entsprechenden Signalen mit einem Drucksensor,
- Wahlweises Zu- und Abführen der Druckluft in die Verstellmittel und aus den Verstellmitteln heraus mithilfe eines federrückgeführten Ventils und
- Wahlweises Absperren der Abfuhr der Druckluft aus den Verstellmitteln heraus mittels eines weiteren Ventils.

Die erfindungsgemäßen Verfahren werden vorzugsweise in der hier angegebenen Abfolge der verfahrensgemäßen Schritte durchgeführt. Allerdings sind die erfindungsgemäßen Verfahren nicht auf diese Abfolge beschränkt.

Die vorliegende Erfindung wird anhand von bevorzugten Ausführungsbeispielen in den folgenden Figuren näher beschrieben. Es zeigen:
- Figur 1: ein erstes Ausführungsbeispiel der erfindungsgemäßen Vorrichtung,
- Figur 2: ein zweites Ausführungsbeispiel der erfindungsgemäßen Vorrichtung,
- Figur 3: eine erste Nutzfahrzeug-Kombination bestehend aus einem Zugfahrzeug und einem Sattelanhänger mit einer erfindungsgemäßen Fahrwerksanordnung, und
- Figur. 4: eine zweite Nutzfahrzeug-Kombination bestehend aus einem Zugfahrzeug und einem Deichselanhänger mit einer Tandem-Deichsel mit einer erfindungsgemäßen Fahrwerksanordnung.

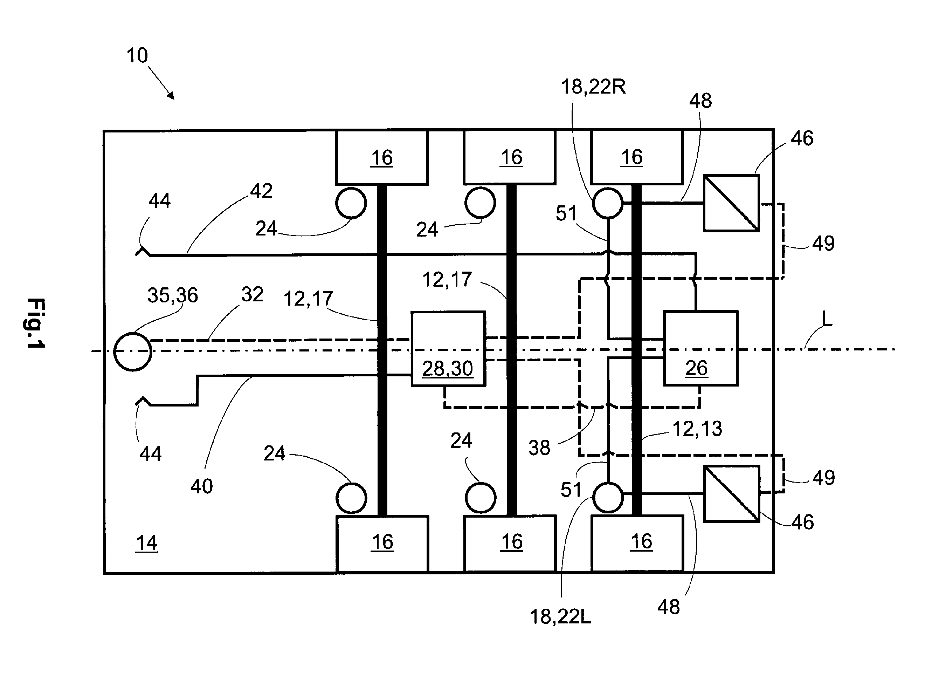

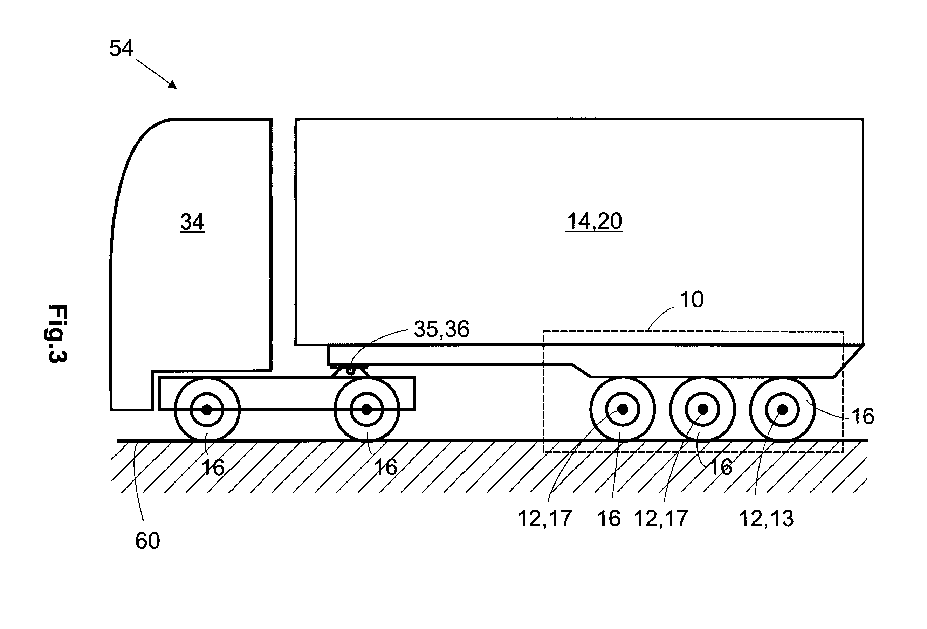

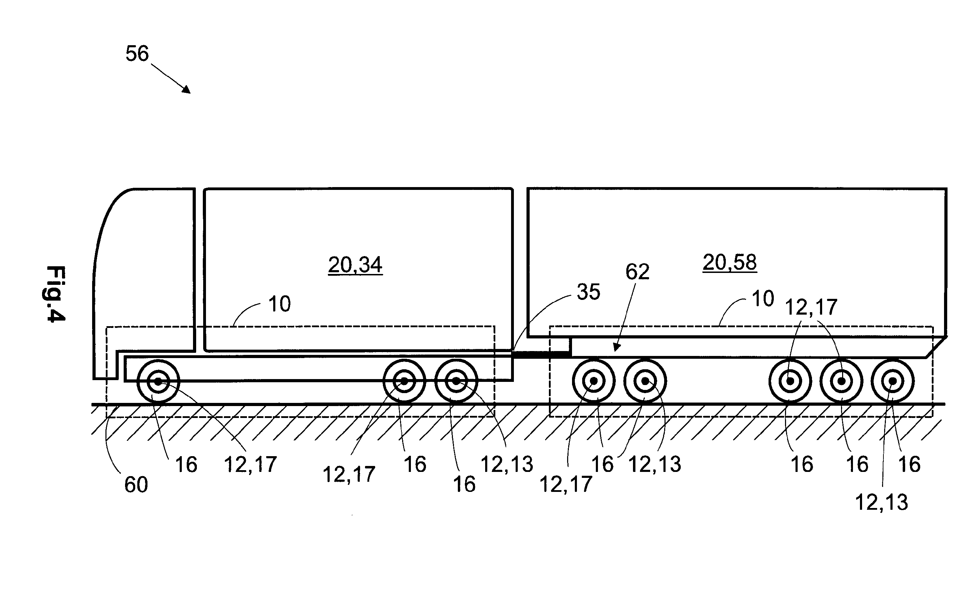

In Figur 1 ist ein erstes Ausführungsbeispiel der erfindungsgemäßen Vorrichtung 10 dargestellt. In diesem Ausführungsbeispiel umfasst die Vorrichtung 10 drei Achsen 12, von denen zwei Achsen als Hauptachsen 17 und die dritte Achse als Schleppachse 13 ausgestaltet sind. Die Anwendbarkeit der vorliegenden Erfindung ist nicht auf eine bestimmte Anzahl von Achsen beschränkt. Dieses Ausführungsbeispiel ist typisch für einen Sattelanhänger 14 (vgl. Figur 3). Jeder Achse 12 sind jeweils zwei Räder 16 zugeordnet, wobei einer Achse auch mehr Räder zugeordnet sein können, wie es etwa bei Zwillingsreifen der Fall ist. Der Schleppachse 13 ist ein Verstellmittel 18 zugeordnet, mit dem die Achse 13 relativ zu einem hier nicht dargestellten Aufbau 20 verstellt werden können (vgl. Figuren 3 und 4). Im dargestellten Beispiel sind die Verstellmittel 18 als Luftbalge 22 ausgeführt, die mit Druckluft beaufschlagt werden können. Der rechte Luftbalg der Schleppachse 13 ist zur Unterscheidung mit 22R, der linke mit 22L bezeichnet. Die Hauptachsen 17 weisen ebenfalls Luftbalge 24 auf, allerdings wirken diese nicht als Verstellmittel, sondern dienen ausschließlich der Federung des Sattelanhängers 14.

Weiterhin umfasst die Vorrichtung 10 ein impulsgesteuertes Ventil 26 zum wahlweisen Be- und Entlüften der Luftbalge 22. Als impulsgesteuertes Ventil wird hier im Ausführungsbeispiel ein 3/3 Wegeventil bezeichnet, das die Stellungen Belüften, Entlüften und Halten einnehmen kann. Dieses impulsgesteuerte Ventil 26 wird von einer Steuereinrichtung 28, ausgeführt als EBS-Modulator 30, angesteuert. Der EBS-Modulator 30 ist über eine erste elektrische Leitung 32 mit einem in Figur 1 nicht dargestellten Zugfahrzeug 34 (vgl. Figur 3 und 4) verbunden, um Daten und Befehle mit dem Zugfahrzeug 34 austauschen können. Im dargestellten Beispiel erfolgt die elektrische Verbindung zwischen dem Zugfahrzeug 34 und dem Sattelanhänger 14 über eine mechanische Kupplung 35, ausgeführt als ein Aufliegepunkt 36, über den sämtliche zwischen dem Zugfahrzeug 34 und dem Sattelanhänger 14 auftretenden mechanischen Kräfte übertragen werden. Selbstverständlich ist es auch möglich, die elektrische Verbindung zwischen dem Zugfahrzeug 34 und dem Sattelanhänger 14 über separate elektrische Steckverbindungen zu realisieren.

Die Ansteuerung des impulsgesteuerten Ventils 26 wird über eine zweite elektrische Leitung 38 realisiert. Die Druckluft wird von zwei sich im Zugfahrzeug 34 befindenden Druckluftspeichern vorgehalten, von denen eine erste pneumatische Leitung 40 in den EBS-Modulator 30 und eine zweite pneumatische Leitung 42 in das impulsgesteuerte Ventil 26 münden. Die pneumatische Verbindung zwischen dem Zugfahrzeug 34 und dem Sattelanhänger 14 geschieht hier über pneumatische Steckverbindungen 44. Vom impulsgesteuerten Ventil 26 führt eine dritte pneumatische Leitung 48 zum Luftbalg 22. Um den Druck in den Luftbalgen 22 bestimmen zu können, ist diesen je ein Drucksensor 46 zugeordnet. Der Drucksensor 46 ist mit den Luftbalgen 22 über eine vierte pneumatische Leitung 51 verbunden und wandelt den gemessenen Druck in entsprechende elektrische Signale um, die über eine dritte elektrische Leitung 49 zum EBS-Modulator 30 geführt werden.

Im dargestellten Beispiel ist für jeden Luftbalg 22 ein eigener Drucksensor 46 vorgesehen. Ferner ist das impulsgesteuerte Ventil 26 so ausgestaltet, dass es den linken und den rechten Luftbalg 22L und 22R separat be- und entlüften kann. Alternativ kann jedoch auch nur ein Drucksensor 46 vorgesehen und das impulsgesteuerte Ventil 26 so ausgestaltet sein, dass der linke und der rechte Luftbalg 22L und 22R gemeinsam be- und entlüftet werden. In dieser Alternative ist es allerdings nicht möglich, die Neigung des Sattelanhängers 14 um eine Längsachse L zu verändern, beispielsweise bei einer Beladung, die sich schwerpunktmäßig nicht auf der Längsachse L befindet oder beim Anpassen an eine Laderampe, deren benachbarte Fahrbahn eine seitliche Neigung aufweist.

Der Betrieb der erfindungsgemäßen Vorrichtung 10 wird exemplarisch an einem Beispiel erläutert, wobei von einem Grundzustand ausgegangen wird, in dem alle Achsen 12 vollständig abgesenkt, also alle Luftbalge 22 vollständig belüftet sind. Der Fahrer des Zugfahrzeuges 34 (vgl. Figur 3) will nun einen Rangiervorgang vornehmen, wozu er den Befehl gibt, die Schleppachse 13 vollständig anzuheben. Dieser Befehl gelangt über den Aufliegepunkt 36 und über die erste elektrische Leitung 32 zum EBS-Modulator 30, der wiederum das impulsgesteuerte Ventil 26 so ansteuert, dass die Luftbalge 22 der Schleppachse 13 entlüftet werden und die Schleppachse 13 angehoben wird. Der Entlüftungsvorgang dauert solange an, bis ein bestimmter vorgebbarer Minimaldruck erreicht wird. Dann sendet der Drucksensor 46 ein entsprechendes Signal an den EBS-Modulator 30, der wiederum das impulsgesteuerte Ventil 26 so ansteuert, dass die Entlüftung beendet wird. Sollte der Druck beispielsweise durch Porositäten im Luftbalg 22 unter den Minimaldruck sinken, so sendet der Drucksensor 46 ein entsprechendes Signal an den EBS-Modulator 30, der das impulsgesteuerte Ventil 26 so ansteuert, dass der Minimaldruck wieder erreicht wird.

Weiterhin ist es ebenfalls möglich, den EBS-Modulator 30 so zu konfigurieren, dass die Schleppachse 13 nur unter einer bestimmten Geschwindigkeit angehoben oder gesenkt werden kann, um Lastwechsel während der Fahrt zu vermeiden. Auch ist es möglich, die Schleppachse 13 automatisch abzusenken, wenn die Achslast der Hauptachsen 17 einen bestimmten Wert überschreitet. Mithilfe des impulsgesteuerten Ventils 26 kann jeder beliebige Druck im Luftbalg 22 stufenlos eingesteuert werden, wobei ein bestimmbarer Minimaldruck in den Luftbalgen 22 nicht unterschritten wird.

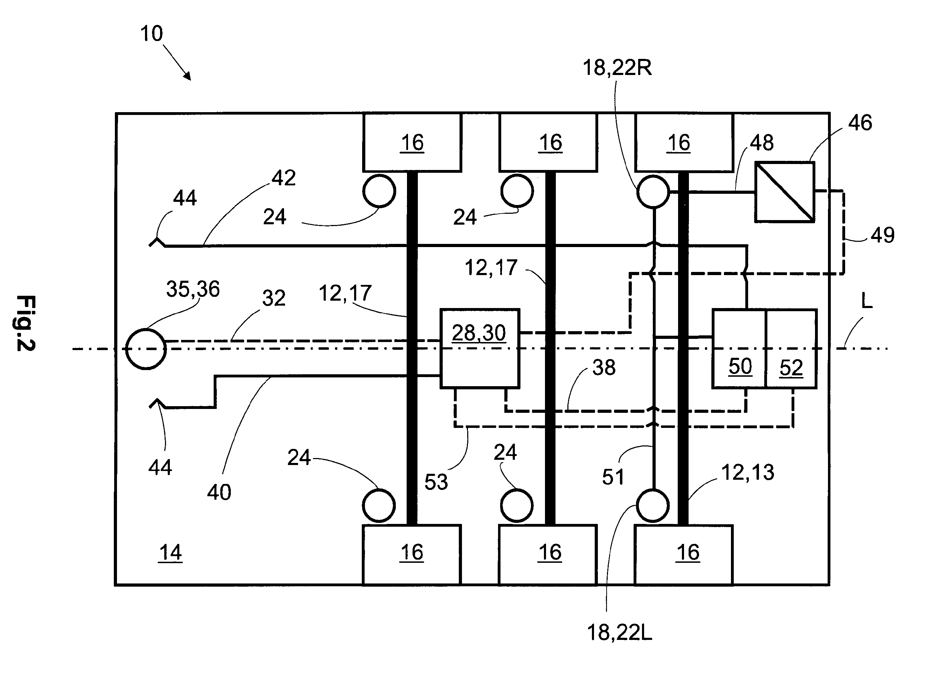

In Figur 2 ist ein weiteres Ausführungsbeispiel der erfindungsgemäßen Vorrichtung 10 dargestellt. Der prinzipielle Aufbau 20 der Vorrichtung 10 entspricht dem des in Figur 1 dargestellten Ausführungsbeispiels. Allerdings kommen in diesem Ausführungsbeispiel kein impulsgesteuertes Ventil, sondern ein federrückgeführtes Ventil 50 und ein weiteres Ventil 52 zum Einsatz, wobei das federrückgesteuerte Ventil 50 über die zweite elektrische Leitung 38 und das weitere Ventil 52 über eine vierte elektrische Leitung 53 mit dem EBS-Modulator 30 verbunden wird. Prinzip-bedingt kann das federrückgeführte Ventil 50 vom EBS-Modulator 30 nur binär angesteuert werden, also entweder geöffnet oder geschlossen werden. Das Einsteuern eines bestimmten Drucks zwischen dem vom Druckluftspeicher vorgegebenen Maximaldruck und dem atmosphärischen Druck im Luftbalg 22 ist allein mit dem federrückgeführten Ventil 50 nicht möglich. Folglich könnte die Schleppachse 13 hier nicht in eine Zwischenstellung gebracht und in dieser gehalten werden. Um dennoch eine stufenlose Verstellbarkeit der Schleppachse 13 zu ermöglichen, wird das weitere Ventil 52 eingesetzt, das sich, wie dargestellt, direkt am federrückgeführten Ventil 50 befindet, oder als separate Einheit über eine pneumatische Leitung mit dem federrückgeführten Ventil 50 verbunden ist (nicht dargestellt). Das weitere Ventil wird so vom EBS-Modulator 30 angesteuert, dass zum einen der gewünschte Druck im Luftbalg 22 vorhanden ist und zum anderen der gewünschte Minimaldruck nicht unterschritten wird.

In Figur 2 ist nur der Luftbalg 22R mit dem Drucksensor 46 über die pneumatische Leitung 48 verbunden. Aufgrund der gewählten Ausgestaltung der vierten pneumatischen Leitung 51 bewirkt das federrückgeführte Ventil 50 und das weitere Ventil 52 sowohl die Be- und Entlüftung des linken Luftbalges 22L als auch des rechten Luftbalges 22R. Selbiges kann auch mit einer entsprechenden Ausgestaltung des federrückgeführten Ventils 50 unter Verwendung der zweier separater vierter pneumatischer Leitungen 51 erreicht werden, wobei die Führung der vierten Leitungen 51 der in Figur 1 gezeigten entsprechen kann. Aufgrund der gewählten Ausgestaltung herrscht sowohl im linken als auch im rechten Luftbalg 22L und 22R derselbe Druck. Auf diese Weise kann auf einen zweiten Drucksensor 46 pro Achse verzichtet werden, allerdings ist es in dieser Konfiguration nicht möglich, den Sattelanhänger um die Längsachse L zu neigen.

In Figur 3 ist eine erste Nutzfahrzeug-Kombination 54 bestehend aus einem Zugfahrzeug 34 und einem Sattelanhänger 14 mit einer erfindungsgemäßen Vorrichtung 10 dargestellt, wobei der Sattelanhänger 14 eine erfindungsgemäße Vorrichtung 10 aufweist. Der Sattelanhänger 14 ist über den Auflagepunkt 36 mit dem Zugfahrzeug 34 gekoppelt und umfasst zwei Hauptachsen 17 und eine Schleppachse 13.

In Figur 4 ist eine zweite Nutzfahrzeug-Kombination 56 bestehend aus einem Zugfahrzeug 34 und einem Deichselanhänger 58 mit einer Tandem-Deichsel 62 mit einer erfindungsgemäßen Vorrichtung 10 gezeigt. Am Zugfahrzeug-seitigen Ende der Tandem-Deichsel 62 ist der Deichselanhänger 58 über eine mechanische Kupplung 35 mit dem Zugfahrzeug 34 verbunden. In diesem Beispiel weisen sowohl das Zugfahrzeug 34 als auch der Deichselanhänger 58 die erfindungsgemäße Vorrichtung 10 auf. Das Zugfahrzeug 34 umfasst zwei Hauptachsen 17, von denen eine lenkbar ist. Eine oder beide Hauptachsen 17 sind angetrieben. Weiterhin weist das Zugfahrzeug 34 eine Schleppachse 13 auf. Der Deichselanhänger 58 weist insgesamt fünf Achsen 12 auf, von denen zwei zur Tandem-Deichsel 62 zusammengefasst sind und somit den Anhänger lenken. Eine dieser Achsen 12 ist als Schleppachse 13 ausgeführt. Von den übrigen drei Achsen 12 sind zwei als Hauptachse 17 und eine als Schleppachse 13 ausgeführt. Die Verwendung der erfindungsgemäßen Vorrichtung 10 gewährleistet, dass bei der Entlüftung der Schleppachsen 13 ein bestimmter Mindestdruck in den Luftbalgen 22 nicht unterschritten wird.

Die Erfindung ist anhand von Ausführungsbeispielen exemplarisch dargestellt worden. Dabei ergeben sich für den Fachmann offensichtliche und naheliegende Variationsmöglichkeiten. So könnten die einzelnen Elemente der Vorrichtung auch in einer anderen Reihenfolge als der dargestellten angeordnet sein. Weiterhin könnten andere Mittel zur Ermittlung und Aufrechterhaltung des Minimaldrucks in den Luftbalgen eingesetzt werden. Insbesondere können auch lenkbare und angetriebene Achsen erfindungsgemäß ausgestaltet sein. Auch wären Liftachsen mit der erfindungsgemäßen Vorrichtung vorstellbar. Derartige Modifikationen und Variationen gehen nicht über das Grundprinzip der vorliegenden Erfindung hinaus und sind vom Schutzumfang umfasst, der durch die folgenden Ansprüche definiert wird.

## Patentansprüche

1. Vorrichtung zum Durchführen einer Radstandregelung für Nutzfahrzeuge, umfassend
- eine oder mehrere Achsen (12) mit Rädern (16),
- ein oder mehrere mit Druckluft beaufschlagbare Verstellmittel (18) zum Verstellen mindestens einer der Achsen (12) relativ zu einem Aufbau (20), und
- einen Drucksensor (46) zum Messen des Drucks der Druckluft in den Verstellmitteln (18) und zum Erzeugen von entsprechenden Signalen, **gekennzeichnet durch** ein impulsgesteuertes Ventil (26) zum wahlweisen Zu- und Abführen der Druckluft in die Verstellmittel (18) und aus den Verstellmittein (18) heraus.

2. Vorrichtung nach dem Oberbegriff des Anspruchs 1,
**gekennzeichnet durch** ein federrückgeführtes Ventil (50) zum wahlweisen Zu- und Abführen der Druckluft in die Verstellmittel (18) und aus den Verstellmitteln (18) heraus sowie ein weiteres Ventil (52) zum wahlweisen Absperren der Abfuhr der Druckluft aus den Verstellmitteln (18) heraus.

3. Vorrichtung nach Anspruch 1 oder 2,
**gekennzeichnet durch** eine Steuereinrichtung (28), insbesondere eines EBS-Modulators (30) zum Empfangen der vom Drucksensor (46) erzeugten Signale und zum Ansteuern des impulsgesteuerten Ventils (26), des federrückgeführten Ventils (50) sowie des weiteren Ventil (52), welche mittels der Steuereinrichtung (28) ansteuerbar sind.

4. Vorrichtung nach einem der vorherigen Ansprüche,
**dadurch gekennzeichnet, dass** das Verstellmittel (18) als Luftbalg (22) ausgestaltet sind.

5. Vorrichtung nach einem der vorherigen Ansprüche,
**dadurch gekennzeichnet, dass** die Vorrichtung drei Achsen (12) umfasst, von denen zwei als Hauptachse (17) und eine als Schleppachse (13) ausgebildet sind.

6. Vorrichtung nach einem Ansprüche 1 bis 6,
**dadurch gekennzeichnet, dass** die Vorrichtung fünf Achsen (12) umfasst, von denen zwei lenkbar und drei nicht lenkbar sind, wobei von den drei nicht lenkbaren Achsen zwei als Hauptachse (17) und eine als Schleppachse (13) ausgebildet sind.

7. Vorrichtung nach einem der Ansprüche 1 bis 6,
**dadurch gekennzeichnet, dass** die Vorrichtung drei Achsen (12) umfasst, von denen eine lenkbar und mindestens eine angetrieben ist, wobei eine Achse (12) nicht lenkbar, nicht angetrieben und als Schleppachse (13) ausgebildet sind.

8. Nutzfahrzeug mit einer Vorrichtung zum Durchführen einer Radstandregelung nach einem der Ansprüche 1 bis 9.

9. Verfahren zum Durchführen einer Radstandregelung für Nutzfahrzeuge mit einem Aufbau (20) und einer oder mehrerer Achsen (12) mit Rädern (16), umfassend folgende Schritte:
- Verstellen einer der Achsen (12) relativ zum Aufbau (20) mit einem oder mehreren mit Druckluft beaufschlagbare Verstellmitteln (18), und
- Messen des Drucks der Druckluft in den Verstellmitteln (18) und Erzeugen von entsprechenden Signalen mit einem Drucksensor (46),
**gekennzeichnet durch**
- Wahlweises Zu- und Abführen der Druckluft in die Verstellmittel (18) und aus den Verstellmitteln (18) heraus mithilfe eines impulsgesteuerten Ventils (26).

10. Verfahren zum Durchführen einer Radstandregelung für Nutzfahrzeuge mit einem Aufbau (20) und einer oder mehrerer Achsen (12) mit Rädern (16), umfassend folgende Schritte:
- Verstellen einer der Achsen (12) relativ zum Aufbau (20) mit einem oder mehreren mit Druckluft beaufschlagbare Verstellmitteln (18), und
- Messen des Drucks der Druckluft in den Verstellmitteln (18) und Erzeugen von entsprechenden Signalen mit einem Drucksensor (46),
**gekennzeichnet durch**
- Wahlweises Zu- und Abführen der Druckluft in die Verstellmittel (18) und aus den Verstellmitteln (18) heraus mithilfe eines federrückgeführten Ventils (50) und
- Wahlweises Absperren der Abfuhr der Druckluft aus den Verstellmitteln (18) heraus mittels eines weiteren Ventils (52).
